**Europäisches Patentamt**

**European Patent Office**

**Office européen des brevets**

(19)

(11) Veröffentlichungsnummer: **0 106 035 B1**

# (12) EUROPÄISCHE PATENTSCHRIFT

(45) Veröffentlichungstag der Patentschrift:
07.01.87

(21) Anmeldenummer: 83107256.6

(22) Anmeldetag: 23.07.83

(51) Int. Cl.⁴: **B 65 H 59/38,** B 65 H 51/30,
B 65 H 51/22, D 01 H 15/02

(54) **Fadenspeicher mit einer Einrichtung zum Messen der gespeicherten Fadenlänge.**

(30) Priorität: 16.10.82 DE 3238375

(43) Veröffentlichungstag der Anmeldung:
25.04.84 Patentblatt 84/17

(45) Bekanntmachung des Hinweises auf die Patenterteilung:
07.01.87 Patentblatt 87/2

(84) Benannte Vertragsstaaten:
CH FR IT LI

(56) Entgegenhaltungen:
DE - A - 2 553 892
DE - A - 2 716 017
FR - A - 2 143 037
US - A - 4 368 854

(73) Patentinhaber: **Schubert & Salzer Maschinenfabrik
Aktiengesellschaft, Friedrich-Ebert-Strasse 84,
D-8070 Ingolstadt (DE)**

(72) Erfinder: **Bock, Erich, Dipl.-Ing., Rosenstrasse 11 1/2,
D-8071 Wettstetten (DE)**
Erfinder: **Promoli, Johann-Christian, Dipl.-Ing.,
Odilostrasse 54, D-8070 Ingolstadt (DE)**
Erfinder: **Dämmig, Joachim, Goethestrasse 149,
D-8070 Ingolstadt (DE)**

### Beschreibung

Die vorliegende Erfindung betrifft einen Fadenspeicher mit einer antreibbaren Speicherwalze und mit einer Einrichtung zum Messen der gespeicherten Länge des Fadens, welcher der Speicherwalze tangential zuführbar und von ihr gegen die Wirkung eines Rückhalteelementes durch eine in Verlängerung ihrer Achse angeordnete Fadenführung hindurch mit Hilfe einer Abzugsvorrichtung abziehbar ist.

Bei bekannten derartigen Vorrichtungen wird die Reflexion des Lichtes einer als Lichtschranke ausgebildeten Überwachungseinrichtung gemessen (DE-AS 2 706 018) oder aber in Abhängigkeit von der gespeicherten Fadenmenge durch Verschwenken des als Schaltring ausgebildeten Vorschubringes der Speicherwalze oder durch Freigabe eines gefederten Armes infolge Abnahme des Fadenvorrates ein Schalter betätigt (DE-OS 2 558 419). Derartige Überwachungseinrichtungen arbeiten jedoch recht ungenau und zeigen nur gewisse Zonenbreiten an, innerhalb welcher sich der Fadenvorrat bewegt.

Aufgabe der vorliegenden Erfindung ist es, einen im Aufbau einfachen Fadenspeicher so auszubilden, dass die auf der Speicherwalze gespeicherte Fadenlänge sehr präzise gemessen werden kann.

Diese Aufgabe wird erfindungsgemäss dadurch gelöst, dass die Einrichtung zum Messen der gespeicherten Fadenlänge eine Fadenumlauf-Überwachungsvorrichtung, eine Vorrichtung zur Feststellung der Fadenumlaufrichtung sowie einen Impulszähler aufweist, welcher sowohl mit der Fadenumlauf-Überwachunsgvorrichtung als auch der Vorrichtung zur Feststellung der Fadenumlaufrichtung in steuermässiger Verbindung steht und welcher in Abhängigkeit von einem Wechsel der Fadenumlaufrichtung von Vor- und Rückwärtszählen oder umgekehrt umschaltbar ist. Bei einer Abzugsgeschwindigkeit des Fadens von der Speicherwalze, die mit der Liefergeschwindigkeit des Fadens übereinstimmt, läuft der Faden auf der Abzugsseite der Speicherwalze nicht um; wenn die Liefergeschwindigkeit des Fadens zur Speicherwalze die Abzugsgeschwindigkeit des Fadens von der Speicherwalze übersteigt, läuft der Faden in Drehrichtung der Speicherwalze um, während dann, wenn die Abzugsgeschwindigkeit grösser als die Liefergeschwindigkeit ist, der Faden entgegen der Drehrichtung der Speicherwalze umläuft. Die Zahl der Fadenumläufe gibt somit an, wieviel Faden auf der Speicherwalze gespeichert ist. Aus diesem Grunde wird mit Hilfe der Fadenumlauf-Überwachungsvorrichtung festgestellt, wie oft der Faden die Überwachungsstelle passiert hat, während die Vorrichtung zur Feststellung der Fadenumlaufrichtung festhält, ob der Fadenvorrat auf der Speicherwalze zu- oder abnimmt. In Abhängigkeit von der Fadenumlaufrichtung addiert oder subtrahiert daher der Impulszähler die von der Fadenumlauf-Überwachungsvorrichtung empfangenen Impulse, so dass die gespeicherte Impulszahl im direkten Verhältnis zum gespeicherten Fadenvorrat steht.

Im Prinzip können die Fadenumläufe direkt gemessen werden. Aufgrund unterschiedlichen Reflexionsverhaltens des Fadens und der Speicherwalze kann festgestellt werden, wie oft der Faden die Fadenumlauf-Überwachungsvorrichtung passiert hat, während die Fadenumlaufrichtung in üblicher Weise festgestellt wird. Einfacher und mit weitaus weniger empfindlichen Elementen lässt sich die auf der Speicherwalze gespeicherte Fadenlänge jedoch messen, wenn die Fadenumlauf-Überwachungsvorrichtung dem Fadenrückhalteelement zugeordnet ist, das im gleichen Drehsinn wie die Speicherwalze derart antreibbar ist, dass seine Geschwindigkeit durch die von dem von der Speicherwalze ablaufendem Faden ausgeübte Zugkraft begrenzt ist.

Vorzugsweise steht der Impulszähler steuermässig mit dem Antrieb der Abzugsvorrichtung in Verbindung, um zu vermeiden, dass gewisse Minimal- oder Maximalmengen auf der Speicherwalze unter- bzw. überschritten werden.

Zweckmässigerweise wird die Abzugsvorrichtung durch eine in Fadenlaufrichtung nach der Speicherwalze angeordnete Spulvorrichtung gebildet.

In weiterer vorteilhafter Ausgestaltung des Erfindungsgegenstandes kann die Vorrichtung zur Feststellung der Fadenumlaufrichtung durch eine zwischen der Speicherwalze und einer Spulvorrichtung angeordnete Fadenverbindungsvorrichtung ersetzt werden, welche den Impulszähler bei Beginn ihrer Arbeit auf Vorwärtszählen und bei Beenden ihrer Arbeit auf Rückwärtszählen stellt.

Zweckmässigerweise steht die Fadenverbindungsvorrichtung steuermässig mit dem Antrieb der Spulvorrichtung in Verbindung. Solange die Fadenverbindungsvorrichtung arbeitet, muss in ihrem Arbeitsbereich der Faden stillstehen, so dass die Spulvorrichtung stillgesetzt ist. Ein nachgelieferter Faden wird somit auf der Speicherwalze lediglich aufgewickelt. Ist die Fadenverbindungsvorrichtung mit ihrer Arbeit fertig, so setzt sie die Spulvorrichtung wieder in Betrieb, die aufgrund ihrer Geschwindigkeit, die üblicherweise wegen des ohnehin erforderlichen Anspannungsverzuges höher ist als die Zuliefergeschwindigkeit eines Fadens zur Speicherwalze, letztere wieder entleert. Damit dieses Entleeren nicht zu lange Zeit in Anspruch nimmt, ist vorteilhafterweise eine mit dem Impulszähler verbundene Steuervorrichtung zur Steuerung der Geschwindigkeit der Spulvorrichtung in Abhängigkeit von der auf der Speicherwalze befindlichen Fadenlänge vorgesehen.

Um eine Überfüllung der Speicherwalze auszuschliessen, kann der Impulszähler mit einer Stillsetzvorrichtung für den Fadenspeicher oder eine diesem zugeordnete Vorrichtung in Verbindung stehen.

Die erfindungsgemässe Vorrichtung ermöglicht ein einfaches und äusserst präzises Messen der auf der Speicherwalze gespeicherten Fadenlänge. Die Genauigkeit kann bei Benutzung eines Fadenrückhalteringes noch wesentlich erhöht werden, da diese im wesentlichen durch die Dichte der Fadenrückhalter des Fadenrückhalteringes (oder Markierungen an diesem) bestimmt wird. Dieser Fadenrückhaltering kann dabei nach Belieben geschlossene oder auch radial nach aussen offene Fadenrückhalter aufweisen, so dass die Speicherwalze in einen geschlossenen Fadenlauf hinein oder auch aus diesem wieder herausgenommen werden kann, wobei der Zeitpunkt der hiermit in Verbindung stehenden Steuervorgänge dank der genauen Kenntnis des jeweils gespeicherten Fadenvorrates genauestens festgelegt werden kann.

Eine derartige Vorrichtung zum Messen des Füllzustandes der Speicherwalze hat den Vorteil, dass sie unabhängig von der Fadengeschwindigkeit, von der Fadenstärke, von den Drehzahlen am Fadenspeicher und von den Abmessungen des Fadenspeichers arbeitet. Dies gilt auch unabhängig von der Speicherdauer. Der Füllgrad des Fadenspeichers wird allein durch die Differenz der Fadenumläufe in den beiden Umlaufrichtungen bestimmt.

Die Erfindung wird nachstehend anhand einer Zeichnung näher erörtert, die den Erfindungsgegenstand im Schema im Zusammenhang mit einer im Schnitt dargestellten Offenend-Spinnmaschine mit einer Fadenverbindungsvorrichtung zeigt.

Der Fadenspeicher 1 – und damit auch die Vorrichtung zum Messen der auf dem Fadenspeicher 1 gespeicherten Fadenlänge – kann prinzipiell an allen Textilmaschinen, an denen Fadenspeicher 1 mit einer Speicherwalze 10 zum Einsatz kommen, Anwendung finden, beispielsweise an Wirk- und Strickmaschinen oder auch an Webmaschinen. Da jedoch die Arbeitsbedingungen an einer Offenend-Spinnmaschine gegenüber den zuvor genannten Maschinen noch schwieriger sind, insbesondere wenn der Fadenspeicher 1 auf einer verfahrbaren Wartungsvorrichtung 2 angeordnet sein soll, werden der Aufbau und die Funktion des Fadenspeichers 1 nachstehend am Beispiel einer Offenend-Spinnmaschine erläutert.

In der Abbildung sind von einer derartigen Offenend-Spinnmaschine lediglich die durch ein Viereck angedeutete Spinnvorrichtung 3, ein Abzugswalzenpaar 30 sowie eine Spulvorrichtung 6 dargestellt. Ein in der Spinnvorrichtung 3 erzeugter Faden 31 wird mit Hilfe des Abzugswalzenpaar 30 aus der Spinnvorrichtung 3 abgezogen und sodann der Spulvorrichtung 6 zugeführt, wo der Faden 31 auf eine Hülse zur Bildung einer Spule aufgewickelt wird.

Die Wartungsvorrichtung 2, die längs der Offenend-Spinnmaschine verfahrbar ist und somit eine Vielzahl von Spinnstellen dieser Maschine nacheinander bedienen kann, wird in bekannter Weise für diese Bedienung in den Fadenlauf zwischen dem Abzugswalzenpaar 30 und der als Spulvorrichtung 6 ausgebildeten Fadenaufnahmestelle gebracht. Der Spulvorrichtung 6 ist dabei eine von der Wartungsvorrichtung 2 aus steuerbare (nicht gezeigte) Antriebsvorrichtung zugeordnet. Ausserdem besitzt die Wartungsvorrichtung 2 im gezeigten Ausführungsbeispiel ein Hilfsabzugswalzenpaar 20, das von einem Motor 21 aus über einen Riemen 22 angetrieben wird.

Die Wartungsvorrichtung 2 besitzt ausserhalb des durch das Abzugswalzenpaar 30 der Offenend-Spinnmaschine und dem Hilfsabzugswalzenpaar 20 der Wartungsvorrichtung 2 festgelegten Fadenlaufs 32 in Fadenlaufrichtung nacheinander den bereits erwähnten Fadenspeicher 1 sowie eine Fadenverbindungsvorrichtung 23, die verschieden, beispielsweise als Knotvorrichtung, ausgebildet sein kann.

Der gezeigte Fadenspeicher 1 besitzt eine Basis 11, mit deren Hilfe er an der Wartungsvorrichtung 2 starr oder auf einem Hebel oder Gestänge schwenkbar gelagert ist. Die Basis 11 besitzt ihrerseits eine Nabe 110, in welcher über ein oder mehrere Lager 111 eine Antriebswelle 12 gelagert ist. Auf der Welle 12 ist mit Hilfe eines Lagers 100 die bereits erwähnte Speicherwalze 10 gelagert, die an ihrem der Basis 11 zugewandten Zuführende 101 Mitnahmeschlitze 102 aufweist. Mit diesen Mitnahmeschlitzen 102 steht eine Fadenvorschubscheibe 13 zahnend im Eingriff, die auf der Nabe 110 der Basis 11 mit 130 drehbar gelagert ist und somit bei einer Drehung der Speicherwalze 10 von dieser mitgenommen wird. Die Fadenvorschubscheibe 13 ist in bekannter Weise gegenüber der durch die Antriebswelle 12 gebildeten Achse 122 der Speicherwalze 10 geneigt, um den erforderlichen Fadenvorschub zu bewirken.

Die Basis 11 weist einen zylinderförmigen Mantel 112 auf, der die Fadenvorschubscheibe 12 an ihrem Umfang teilweise umhüllt, sie aber andererseits noch um ein solches Mass über die Stirnfläche des Mantels 112 hinausragen lässt, dass sie die erforderliche Vorschubwirkung auf den Faden ausüben kann.

Mit der Welle 12 ist ein Drehantrieb 120 verbunden, der gemäss Darstellung als Motor ausgebildet ist, doch können auch andere Antriebe – z.B. Getriebe, die durch andere angetriebene Elemente angetrieben werden – Anwendung finden. Dieser Drehantrieb 120 wird von der Basis 11 des Fadenspeichers 1 getragen. An ihrem freien Ende trägt die Antriebswelle 12 eine Stirnplatte 121, die zusammen mit der Welle 120 mit gleicher Geschwindigkeit umläuft.

Zwischen der Stirnplatte 121 und der Speicherwalze 10 ist ein als Fadenrückhaltering 14 ausgebildetes Rückhalteelement mit Hilfe eines Lagers 140 drehbar auf der Welle 12 gelagert. Der Fadenrückhaltering 14 überdeckt mit einer kurzen Umfangsfläche 142 sowohl das Ablaufende 103 der Speicherwalze 10 als auch den Aussenumfang der Stirnplatte 121, um die Gefahr des Einklemmens des Fadens 31 zwischen dem Fadenrückhaltering 14 und der Speicherwalze 10 einerseits und der Stirnplatte 121 andererseits auszuschliessen.

Der Fadenrückhaltering 14 besitzt an seinem Umfang mehrere Fadenrückhalter 141, doch genügt unter Umständen auch eine einzige derartige Fadenführung 141. Der Fadenrückhalter 141 ist bzw. die Fadenrückhalter 141 sind radial nach aussen hin offen ausgebildet, so dass von aussen ein Faden 30 in den Eingriffsbereich des Fadenrückhalters 141 gebracht werden kann.

Das Lager 100 der Speicherwalze 10 ist im Abstand von ihrem Ablaufende 103 angeordnet, so dass die Speicherwalze 10 mit einer Radialwand 104 zusammen mit dem Fadenrückhaltering 14 einen Raum 15 umschliesst. In diesem Raum 15 ist im Abstand von der Radialwand 104 und auch vom Fadenrückhaltering 14 ein Permanentmagnet 150 auf der Antriebswelle 12 angeordnet. Die Speicherwalze 10 trägt auf der dem Permanentmagneten 150 zugewandten Seite ihrer Radialwand 104 eine Hysteresisscheibe 105, während der Fadenrückhalterung 14 auf seiner dem Permanentmagneten 150 zugewandten Seite eine Hysteresisscheibe 143 trägt. Die beiden als Hysteresiskupplungen ausgebildeten Schlupfkupplungen werden somit von der Welle 12 über einen einzigen Permanentmagneten 150 angetrieben.

In Verlängerung der durch die Antriebswelle 12 gebildeten Achse 122 des Fadenspeichers 1 befindet sich eine Fadenführung 4, die aus zwei relativ zueinander beweglichen Fadenführungsteilen 40 und 41 besteht. Das Fadenführungsteil 40 wird stationär von der Wartungsvorrichtung 2 getragen, während das Fadenführungsteil 41 von der Wartungsvorrichtung 2 beweglich getragen wird. Beide Fadenführungsteile 40 und 41 sind gabelförmig ausgebildet. Durch einen nicht gezeigten Schwenkantrieb kann das Fadenführungsteil 41 aus einer Bereitschaftsstellung 410 in die gezeigte Schliessstellung gebracht werden, wobei es den dem Fadenlauf 32 folgenden Faden 31 erfasst und in die gezeigte Stellung mitnimmt, in welcher der Faden 31 zwischen den Fadenführungsteilen 40 und 41 eingeschlossen und geführt wird.

Der Speicherwalze 10 ist eine Fadenumlauf-Überwachungsvorrichtung 50 zugeordnet, die mit einem Impulszähler 5 in Verbindung steht, mit welchem auch die Fadenverbindungsvorrichtung 23 steuermässig in Verbindung steht. Der Impulszähler 5 ist seinerseits über eine Steuervorrichtung 51 steuermässig mit dem Motor 21 des Hilfsabzugswalzenpaares 20 verbunden.

In Nähe des Fadenlaufes 33 zwischen dem Abzugswalzenpaar 30 und dem Fadenspeicher 1 ist die Mündung 240 eines beweglichen Absaugrohres 24 angeordnet, während in Nähe des Fadenlaufs nach dem Hilfsabzugswalzenpaar 20 die Mündung eines Absaugrohres 26 angeordnet ist.

Zwischen der Fadenverbindungsvorrichtung 23 und dem Hilfsabzugswalzenpaar 20 befindet sich ein Fadenwächter 25, der über eine Steuervorrichtung 250 mit dem Drehantrieb 120 des Fadenspeichers 1 und mit einer Liefervorrichtung zum Zuführen eines in Einzelfasern aufzulösenden Faserbandes zur Spinnvorrichtung 3 in Verbindung steht. Ferner befindet sich zwischen dem Fadenwächter 25 und der Spulvorrichtung 6 eine Fadenumlenkvorrichtung 27.

Die vorstehend im Aufbau beschriebene Vorrichtung arbeitet wie folgt:

Während des normalen, ungestörten Spinnprozesses wird der in der Spinnvorrichtung 3 erzeugte Faden 31 von dieser durch das Abzugswalzenpaar 30 abgezogen und der Spulvorrichtung 6 zugeführt. Tritt ein Fadenbruch auf, so wird die Wartungsvorrichtung 2 in bekannter Weise zu der betreffenden Spinnstelle gerufen, wo sie den Fadenbruch behebt. Der angesponnene Faden 31 wird anschliessend bei stillstehender Spulvorrichtung 6 durchtrennt, wobei der sich zur Spulvorrichtung 6 erstreckende Fadenabschnitt über die Fadenumlenkvorrichtung 27 hinweg dem sich in der Position 241 befindlichen Absaugrohr 24 zugeführt wird, der diesen Fadenabschnitt somit gespannt hält. Der andere, durch die Spinnvorrichtung 3 laufend nachgelieferte Fadenabschnitt wird in das Hilfsabzugswalzenpaar 20 eingelegt und dem Absaugrohr 26 zugeführt und dort laufend abgesaugt.

Der Fadenspeicher 1 befindet sich hierbei mit seiner Achse 122 in einem spitzen Winkel α zum Fadenlauf 32, wobei sich das Ablaufende 103 näher beim Fadenlauf 32 befindet. Der Drehantrieb 120 des Fadenspeichers 1 treibt über die Welle 12, den Permanentmagneten 150 sowie die Hysteresisscheiben 105 und 143 die Speicherwalze 10 und den Fadenrückhaltering 14 an, die dieser Antriebsbewegung ungehindert folgen. Die Drehzahl von Antriebswelle 12, Speicherwalze 10 und Fadenrückhaltering 14, die zunächst synchron umlaufer ist dabei so gewählt, dass die Umfangsgesch. .ndigkeit der Speicherwalze 10 höher liegt als die Geschwindigkeit, mit welcher der Faden 31 durch das Abzugswalzenpaar 30 von der Spinnvorrichtung 3 abgezogen wird.

Nun wird das Fadenführungsteil 41 aus seiner Bereitschaftsstellung 410 in die gezeigte Schliessstellung gebracht, in welcher der sich zum Hilfsabzugswalzenpaar 20 erstreckende Fadenabschnitt zwischen den Fadenführungsteilen 40 und 41 eingeschlossen ist. Dieser Fadenabschnitt gelangt hierbei in die Bahn des umlaufenden Fadenrückhalters 141, der durch diesen Fadenabschnitt, der durch das mit gleicher Geschwindigkeit wie das Abzugswalzenpaar 30 umlaufende Hilfsabzugswalzenpaar 20 gespannt gehalten wird, am weiteren Umlauf gehindert wird. Die Speicherwalze 10 läuft jedoch mit unverminderter Geschwindigkeit um. Der Fadenabschnitt wird zunächst weiterhin durch das Hilfsabzugswalzenpaar 20 abgezogen und durch das diesem Hilfsabzugswalzenpaar 20 folgende Absaugrohr 26 abgeführt.

Der andere Fadenabschnitt, der sich von der Spulvorrichtung 6 zur Mündung 240 des Absaugrohres 24 erstreckt, wird so geführt, dass er nicht in den Fadenspeicher 1 gelangt.

Die beiden zu verbindenden Fadenabschnitte werden in der beschriebenen Weise durch die Fadenumlenkvorrichtung 27 und das Absaugrohr 24 bzw. durch die Fadenführung 4 und das Hilfsabzugswalzenpaar 20 parallel zueinander geführt, so dass sie zum Fadenverbinden von der Fadenverbindungsvorrichtung 23 sicher aufgenommen werden können.

Solange die Fadenverbindungsvorrichtung 23 ihre Arbeit noch nicht aufgenommen hat, wirkt der elastisch, d.h. mit Schlupf angetriebene Fadenrückhaltering 14 des Fadenspeichers 1 wie ein Fadenausgleichselement. Lässt nämlich die Fadenspannung vorübergehend etwas nach, so verdreht sich der Fadenrückhaltering 14 in der Antriebsrichtung und bewirkt hierbei eine gewisse Umschlingung der Speicherwalze 10, die bei wieder ansteigender Fadenspannung – beispielsweise nach Beendigung der Fadenverbindung – wieder aufgehoben wird.

Sodann beginnt die Fadenverbindungsvorrichtung 23 mit ihrer Arbeit, wobei die miteinander zu verbindenden Fadenabschnitte stillgesetzt werden müssen. Über die Steuervorrichtung 5 setzt die Fadenverbindungsvorrichtung 23 den Motor 21 still, so dass auch das Hilfsabzugswalzenpaar 20 stillgesetzt wird. Der von der Spinnvorrichtung 3 weiterhin produzierte und durch das Abzugswalzenpaar 30 nachgelieferte Fadenabschnitt entspannt sich somit, so dass der Fadenrückhalter 141, der diesen Fadenabschnitt bereits zuvor erfasst hatte, nun beginnt, ebenfalls umzulaufen. Die nachgelieferte Fadenlänge gelangt somit auf die Speicherwalze 10 und wird dort abgelegt, wobei die Fadenvorschubscheibe 13 in an sich bekannter Weise die früheren Windungen vom Zuführende 101 der Speicherwalze 10 aus jeweils soweit in Richtung zu deren Ablaufende 103 verschiebt, dass sich die neuen Windungen stets zwischen den vorhandenen Windungen und der Fadenvorschubscheibe 13 ablegen können.

Beim Beginn der Speicherarbeit wird die Speicherwalze 10 langsam auf die Fadenliefergeschwindigkeit, die durch die Drehzahl des Abzugswalzenpaares 30 vorgegeben ist, herabgesetzt. Dabei folgt auch der Fadenrückhaltering 14 mit dem Fadenrückhalter 141 dieser Geschwindigkeitsänderung, da lediglich Schwankungsänderungen auf der Ablaufseite des Fadenspeichers 1 zu Relativbewegungen zwischen Speicherwalze 10 und Fadenrückhaltering 14 führen. Da jedoch während des Fadenverbindens kein Faden vom Fadenspeicher 1 abgezogen wird und da sich die Fadenführung 4 in Verlängerung der Achse 122 des Fadenspeichers 1 befindet, so dass von der Fadenablaufseite des Fadenspeichers 1 keine Spannungsänderungen auftreten, laufen Fadenrückhaltering 14 und Speicherwalze 10 synchron um. Da der Ort der Fadenzuführung zum Fadenspeicher 1 ein Fixpunkt ist, stellen die Umläufe des Fadenrückhalteringes 14 ein Mass für den auf der Speicherwalze 10 befindlichen Fadenvorrat dar. Deshalb werden die Umläufe des Fadenrückhalteringes 14 zum Messen der auf der Speicherwalze 10 gespeicherten Fadenmenge herangezogen. Hierzu ist der Speicherwalze 10 die Fadenumlauf-Überwachungsvorrichtung zugeordnet, die in der gezeigten Darstellung im wesentlichen eine Lichtquelle und eine Photozelle enthält oder als Induktionstaster ausgebildet ist. Die Fadenumlauf-Überwachungsvorrichtung 50 ermittelt somit photoelektrisch oder induktiv die Vorbeigänge des oder der Fadenrückhalter 141, solange die Fadenverbindungsvorrichtung 23 ihre Arbeit durchführt.

Während des Speicherns von Faden 31 auf dem Fadenspeicher 1 kann auch ein Fadenüberschuss, der durch den Arbeitsbeginn oder das Arbeitsende der Fadenverbindungsvorrichtung 23 kurzzeitig auftritt, vom Fadenspeicher 1 gespeichert werden, wobei der Fadenrückhaltering 14 kurzzeitig gegenüber der Speicherwalze 10 in Antriebsrichtung 145 vorläuft, welcher Weg ebenfalls von der Fadenumlauf-Überwachungsvorrichtung 50 festgestellt und in Form von Impulsen vom Impulszähler 5 registriert wird.

Beim Verbinden der beiden sich zum Fadenspeicher 1 und zur Spulvorrichtung 6 erstreckenden Fadenabschnitte durch die Fadenverbindungsvorrichtung 23 werden die sich zum Absaugrohr 24 bzw. zum Absaugrohr 26 erstreckenden Fadenenden abgetrennt und abgesaugt.

Wenn die Fadenverbindungsvorrichtung 23 ihre Arbeit beendet hat, gibt sie über die Steuervorrichtung 51 ein entsprechendes Steuerkommando an die Spulvorrichtung 6, die nun ihre Aufwindearbeit wieder beginnt. Infolge der Aufwindespannung wird hierbei die auf dem Fadenspeicher 1 angesammelte Fadenreserve abgebaut. Durch den von der Fadenverbindungsvorrichtung 23 an die Steuervorrichtung 51 abgegebenen Steuerimpuls wird der Impulszähler 5 auf Rückwärtszählen umgestellt. Die Fadenverbindungsvorrichtung 23 erfüllt somit die Aufgabe einer Vorrichtung zum Feststellen der Fadenumlaufrichtung, da beim Abziehen des Fadens 31 von der Speicherwalze 10 der Fadenrückhaltering 14 durch den abgezogenen Faden 31 gegen die Antriebsrichtung der Speicherwalze 10 gedreht wird. Durch Vergleich der beim Rückdrehen des Fadenrückhalteringes 14 abgegebenen Impulse mit der Zahl der bei der vorherigen Drehung in Antriebsrichtung 145 abgegebenen Impulse kann somit festgestellt werden, ob die gespeicherte Fadenreserve aufgebraucht worden ist oder nicht. Wenn der Impulszähler wieder den Wert Null erreicht hat, stellt er sich um, damit er beim nächsten Speichervorgang wieder vorwärts zählt.

Damit die Fadenreserve nicht unkontrolliert von der Speicherwalze 10 abgezogen werden kann, muss der Faden 31 stets unter Spannung gehalten werden. Dies geschieht durch den über den Permanentmagneten 150 und die Hysteresisscheibe 143 angetriebenen Fadenrückhaltering 14. Somit ist es nur in dem Masse möglich, den Faden 31 von der Speicherwalze 10 abzuziehen, als durch Unterschiede in der Zuliefergeschwindigkeit zum Fadenspeicher 1 – die durch die Drehgeschwindigkeit des Abzugswalzenpaares 30 gegeben ist – und der Abzugsgeschwindigkeit vom Fadenspeicher 1 – die zunächst durch die Drehgeschwindigkeit des Hilfsabzugswalzenpaares 20 und später durch die Aufwindegeschwindigkeit der Spulvorrichtung 6 bzw. durch Fehlen eines Abzuges bei arbeitender Fadenverbindungsvorrichtung 23 gegeben ist – Spannungsunterschiede im Faden 31 auftreten. Durch die elastisch arbeitende Kupplung – Permanentmagnet 150 und Hysteresisscheibe 143 – werden die auftretenden Spannungsspitzen durch Änderungen des Umlaufes des Fadenrückhalteringes 14 jedoch sofort aufgefangen. Der Fadenrückhaltering 14 mit seinem Fadenrückhalter 141 lässt somit nur zu, dass die Fadenmenge, die dem tatsächlichen Geschwindigkeitsüberschuss der vorgegebenen Abzugsgeschwindigkeit gegenüber der Zuliefergeschwindigkeit entspricht, die Speicherwalze 10 verlassen kann.

Nach Entleerung des Fadenspeichers 1 kann die Wartungsvorrichtung 2 die Spinnstelle verlassen und zu einer anderen Spinnstelle fahren, um dort erneut ihre Arbeit auszuführen.

Die vorstehend anhand einer bevorzugten Ausführung beschriebene Vorrichtung kann je nach Anwendung zahlreiche Abwandlungen erfahren.

Beispielsweise braucht der Drehantrieb 120 keinen eigenen Antriebsmotor zu besitzen, sondern die Welle 12 kann über entsprechende Übersetzungen von irgendeinem hierfür geeigneten rotierenden Teil der Wartungsvorrichtung 2, falls vorgesehen, oder der Maschine aus angetrieben werden. Statt eines gemeinsamen Permanentmagneten 150 zum Antrieb der Speicherwalze 10 und des Fadenrückhalteringes 14 können auch zwei separate, räumlich voneinander getrennte Permanentmagnete vorgesehen sein, so dass die als Schlupfkupplungen ausgebildeten Antriebskupplungen für die Speicherwalze 10 und den Fadenrückhaltering 14 gänzlich unabhängig voneinander sind. Die notwendigen Drehmomente und Leistungen der Hysteresiskupplungen (Hysteresisscheibe 143 und Permanentmagnet 150 sowie Hysteresisscheibe 104 und Permanentmagnet 150) sind entsprechend den Gegebenheiten auszuwählen und unter Umständen durch Abstandsänderung zwischen Hysteresisscheibe 143 bzw. 104 und Permanentmagnet 150 einzustellen. Für einen solchen Fall sind separate, auf der Antriebswelle 12 verstellbare Permanentmagneten für die beiden Hysteresisscheiben 143 und 104 besonders vorteilhaft. Auch ist es möglich, statt Hysteresiskupplungen Wirbelstrom- oder Flüssigkeitskupplungen vorzusehen, wobei es auch denkbar ist, für die Speicherwalze 10 und den Fadenrückhaltering 14 separate Antriebe, z.B. Momentenmotoren, vorzusehen.

Der Fadenrückhaltering 14 kann auch über eine Reibkupplung von der Speicherwalze 10 aus angetrieben werden, wobei als Reibkupplung eine Filzlagerung etc. Anwendung finden kann. Ein Antrieb des Fadenrückhalteringes 14 unabhängig von der Speicherwalze 10 hat jedoch den Vorteil, dass auch auf der Seite nach dem Fadenspeicher 1 – bezogen auf den Fadenlauf – auftretende Fadenspannungsabfälle durch den Fadenrückhaltering 14 kompensiert werden können.

Der anhand der Darstellung geschilderte Antrieb ist jedoch besonders vorteilhaft, da er äusserst kompakt ist, keine ins Innere des Fadenspeichers 1 reichenden elektrischen Leitungen benötigt und selbst nach dem Fadenspeicher 1 auftretende Fadenspannungsabfälle kompensieren kann.

Der Fadenrückhaltering 14 kann ebenfalls unterschiedlich ausgebildet und auch aus verschiedenen Werkstoffen hergestellt sein. So ist es zwar zweckmässig, aber nicht in allen Fällen erforderlich, wenn der (oder die) Fadenrückhalter 141 als Haken ausgebildet ist (sind), da auf diese Weise ein besonders rasches Aufnehmen des Fadens 31 durch die den Fadenlauf 34 kreuzenden Fadenrückhalter 141 sichergestellt wird. Wenn ein als Haken ausgebildeter Fadenrückhalter 141 vorgesehen ist, so ist seine Kehle in der durch die Drehrichtung des Drehantriebes 120 vorgegebenen Drehrichtung offen, da hierdurch der Faden 31 sowohl beim Aufwinden auf den Fadenspeicher 1 als auch beim Abwinden vom Fadenspeicher 1 besonders sicher gehalten und geführt wird.

Wenn es nicht erforderlich ist, dass der Fadenspeicher 1 in den Fadenlauf 32 hinein- bzw. wieder aus diesem herausbewegt werden können muss, so kann als Fadenrückhalter 141 auch eine einzelne Öse oder eine Vielzahl von Ösen Anwendung finden, wobei die Vielzahl von Ösen auch durch die Zwischenräume eines nach innen offenen und mit seinen Zinken bis in den Bereich der Speicherwalze 10 hineinreichenden Kammringes gebildet sein kann.

Es ist auch nicht unbedingt erforderlich, dass ein Fadenrückhaltering 14 Anwendung findet. Bei geeigneter Materialwahl für Speicherwalze und Faden mit voneinander abweichenden Reflexionsverhalten kann auch der Faden selber abgetastet werden, so dass anhand der direkt ermittelten Fadenumläufe in der einen oder anderen Richtung und der hierdurch ermittelten Umlaufdifferenz der gespeicherte Fadenvorrat vom Impulszähler registriert werden kann.

Auch die Vorrichtung zur Feststellung der Fadenumlaufrichtung kann unterschiedlich ausgebildet sein. In der zuvor geschilderten Ausführung wird ihre Funktion durch die Fadenverbindungsvorrichtung 23 erfüllt, da in Abhängigkeit von deren Arbeit der Fadenspeicher 1 den gespeicherten Fadenvorrat vergrössert oder abbaut. Es ist aber auch möglich, hierfür den Arbeitszustand (Drehung oder Stillstand) des Hilfsabzugswalzenpaares 20 heranzuziehen. Es ist ferner möglich, dem Fadenrückhaltering 14 oder der Speicherwalze 10 an dem Ablaufende 103 ein Tasterpaar zuzuordnen, das in an sich bekannter Weise feststellt, in welcher Richtung der Faden umläuft. Ein solches Tasterpaar ermöglicht auch eine genaue Feststellung des Zeitpunktes, an welchem der Faden seine Umlaufrichtung ändert. Das Einschalten der Spulvorrichtung 6 kann daher sehr weich durchgeführt werden, so dass sich auch die Drehrichtung des Fadens gegenüber dem Arbeitsende einer Fadenverbindungsvorrichtung 23 verzögert ändert, ohne dass hierbei jedoch Verfälschungen in dem vom Impulszähler gespeicherten Wert auftreten können.

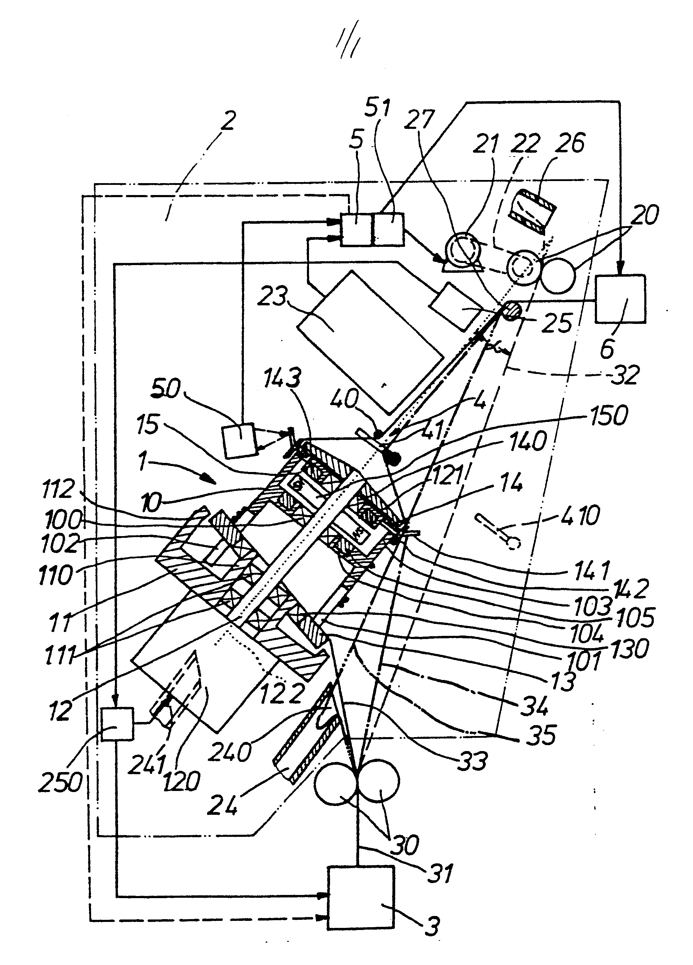

Insbesondere dann, wenn der Fadenspeicher 1 mehreren Arbeitsstellen nacheinander zugeordnet werden kann – z.B. bei Lagerung auf einem Schwenkarm, mit dessen Hilfe der Fadenspeicher zumindest zwei benachbarten Arbeitsstellen zugeordnet werden kann, oder auch bei Lagerung auf einer an einer Vielzahl von Arbeitsstellen vorbeifahrbaren Wartungsvorrichtung 2 – ist es von Vorteil, wenn der Fadenspeicher 1 rasch wieder entleert ist und somit von dieser Arbeitsstelle sehr bald wieder abgezogen werden kann. Zu diesem Zweck ist die in Figur 1 gezeigte Steuervorrichtung 51 nicht nur in der Lage, den Motor 21 und die Spulvorrichtung 6 ein- und auszuschalten, sondern ist darüber hinaus als Geschwindigkeitssteuerung ausgebildet. Diese Geschwindigkeitssteuerung, welche – wie gezeigt – mit dem Impulszähler 5 in Verbindung steht, erhält bei Beginn der Arbeit der Fadenverbindungsvorrichtung 23 von dieser ein Signal zum Stillsetzen des Hilfsabzugswalzenpaares 20 und der Spulvorrichtung 6. Die Fadenumlauf-Überwachungsvorrichtung 50 registriert nun den Umlauf des Fadens. Ist der Fadenverbindungsvorgang abgeschlossen, so wird auch dies durch die Fadenverbindungsvorrichtung 23 an die Steuervorrichtung 51 signalisiert, die nun der Spulvorrichtung den Befehl erteilt, den Faden 31 mit erhöhter Geschwindigkeit von der Speicherwalze 10 abzuziehen. Kurz bevor die Speicherwalze 10 restlos entleert ist, gibt der Impulszähler 5 ein entsprechendes Signal an die Steuervorrichtung 51, die nun die beispielsweise um 30% vorübergehend überhöhte Geschwindigkeit der Spulvorrichtung 6 auf die normale Produktionsgeschwindigkeit reduziert. Dies erfolgt in abgestufter Weise oder kontinuierlich derart, dass der Aufbrauch der gespeicherten Fadenreserve mit dem Erreichen der normalen Spulgeschwindigkeit zusammenfällt.

Beispielsweise weist die Steuervorrichtung 51 einen Digital/Analog-Wandler auf, der die vom Impulszähler 5 gespeicherte Zahl in einen Analogwert umwandelt. Dieser Analogwert steuert die Geschwindigkeit der Spulvorrichtung, wobei durch eine entsprechende Ausbildung der Steuervorrichtung 51 erreicht werden kann, dass ein festgelegter Maximalwert niemals überschritten wird. Dieser Maximalwert ist ein Sollwert, der somit die höchste Spulgeschwindigkeit kennzeichnet. Der Istwert, der hiermit verglichen werden muss, ergibt sich aus der Summe des die normale Spulgeschwindigkeit kennzeichnenden Wertes und des vom Impulszähler 5 abgeleiteten Analogwertes. Ist diese Summe (Istwert) niedriger als der Sollwert, so bestimmt sie die Geschwindigkeit der Spulvorrichtung 6, während dann, wenn dieser Istwert den Sollwert übersteigt, der Sollwert die Geschwindigkeit der Spulvorrichtung 6 bestimmt. Auf diese Weise kann ein sanfter Geschwindigkeitsübergang der Spulvorrichtung 6 auf die normale Spulgeschwindigkeit erreicht werden.

Das Absaugrohr 24 hält während des Fadenverbindens den sich zur Spulvorrichtung 6 erstreckenden Fadenabschnitt. Es ist auch möglich, dass das Absaugrohr 24 sich den Fadenabschnitt hierzu erst von der Spulvorrichtung 6 oder einer Übertragungsvorrichtung, die den Faden von der Spulvorrichtung 6 abgenommen hat, holt. Während der Arbeit des Fadenverbindens jedoch oder zumindest zu Beginn dieser Arbeit, wenn die Fadenverbindungsvorrichtung 23 den Fadenabschnitt aufnimmt, nimmt die Mündung 240 des Absaugrohres 24 die gestrichelt dargestellte Position 241 ein, wandert dann aber in die in Figur 1 mit durchgezogener Linie gezeigte Position. In dieser Position erfüllt das Absaugrohr 24 die Aufgabe, den vom Fadenspeicher 1 bei dessen Entleerung freigegebenen Faden 31 aufzufangen, der nun vorübergehend den Fadenlauf 35 einnimmt. Durch den normalen Anspannungsverzug beim Aufwinden wird auch dieser Fadenüberschuss praktisch ohne wesentliche Spannungsschwankungen aufgebraucht, so dass die Qualität der Windungen auf der Spule nicht beeinträchtigt wird.

Wenn der Fadenverbindungsvorgang misslungen ist, so wird dies durch den Fadenwächter 25 festgestellt. Dieser unterbricht daraufhin sofort die Zufuhr des Fadens 31 zum Fadenspeicher 1 und steht zu diesem Zweck über die Steuervorrichtung 250 steuermässig mit der Vorrichtung zum Erzeugen (Spinnvorrichtung 3) oder zum Liefern des Fadens 31 (Abzugsvorrichtung zum Abziehen des Fadens von einer Spule, z.B. in einer garnverarbeitenden oder garnbehandelnden Maschine) in Verbindung. Die Nachlieferung des Fadens 31 zum Fadenspeicher 1 wird somit unterbunden. Es ist nun erforderlich, die Speicherwalze 1 von ihrem Faden 31 zu befreien, um zu grosse Speichermengen zu vermeiden. Dies kann natürlich von Hand geschehen. In der gezeigten Ausführung ist stattdessen der Fadenwächter 25 über die Steuervorrichtung 250 zusätzlich mit dem Drehantrieb 120 des Fadenspeichers 1 verbunden. Wird nun ein Fadenbruch nach der Fadenverbindungsvorrichtung 23 registriert, so wird auf diese Weise nicht nur die Nachlieferung des Fadens 31 zum Fadenspeicher 1 unterbunden, sondern gleichzeitig die Drehrichtung der Speicherwalze 10 durch Umkehrung der Drehrichtung des Drehantriebes 120 umgekehrt, so dass das Absaugrohr 24 den auf der Speicherwalze 10 gespeicherten und in der Regel bis zur Fadenverbindungsvorrichtung 23 reichenden Faden 31 abziehen und abführen kann.

Das Entleeren des Fadenspeichers 1 kann auch auf andere Weise geschehen. Beispielsweise besitzt die Fadenführung 4 ein (nicht gezeigtes) Walzenpaar mit abhebbarem Druckroller, das bei Auftreten eines Fadenbruchs den Faden vom Fadenspeicher 1 abzieht und einer weiteren, nicht gezeigten Absaugung zuführt.

Wenn ein Fadenbruch aufgetreten ist, so wird nach Entleeren des Fadenspeichers 1 ein Kommando gegeben, damit die Wartungsvorrichtung 2 den missglückten Anspinnvorgang wiederholen kann.

Der Impulszähler 5 kann verschiedene Vorgänge steuern, je nachdem, in was für einer Maschine der Fadenspeicher 1 Anwendung findet. Beispielsweise kann er bei Erreichen eines bestimmten Wertes eine ihm zugeordnete Vorrichtung, z.B. die Liefervorrichtung einer Spinnvorrichtung 3, stillsetzen. Dies ist z.B. zweckmässig, wenn mehrere aufeinanderfolgende Versuche, den Faden 31 mit der Fadenverbindungsvorrichtung 23 zu verbinden, fehlgeschlagen sind, da es sonst zu einer Überfüllung des Fadenspeichers 1 käme. Ähnlich kann es erforderlich sein, eine Strickmaschine stillzusetzen, wenn der Impulszähler 5 einen bestimmten Wert erreicht hat, da dies auf einen Fehler im Fadenablauf hinweist.

Der Impulszähler 5 kann aber auch steuermässig mit dem Antrieb einer Abzugsvorrichtung in Verbindung stehen. Dies ist in dem oben geschilderten Beispiel der Fall, in welchem die Abzugsvorrichtung durch die Spulvorrichtung 6 gebildet wird. Es ist aber auch denkbar, dass diese Abzugsvorrichtung durch eine Strickmaschine oder dergleichen gebildet oder dass die Antriebsvorrichtung 120 des Fadenspeichers 1 stillgesetzt wird, so dass der Fadenspeicher 1 keinen Faden mehr aufnehmen kann.

## Patentansprüche

1. Fadenspeicher (1) mit einer antreibbaren Speicherwalze (10) und mit einer Einrichtung zum Messen der gespeicherten Länge des Fadens, welcher der Speicherwalze (10) tangential zuführbar und von ihr gegen die Wirkung eines Rückhalteelementes (14) durch eine in Verlängerung ihrer Achse (122) angeordnete Fadenführung (4) hindurch mit Hilfe einer Abzugsvorrichtung abziehbar ist, dadurch gekennzeichnet, dass die Einrichtung zum Messen der gespeicherten Fadenlänge eine Fadenumlauf-Überwachungsvorrichtung (50), eine Vorrichtung (23) zur Feststellung der Fadenumlaufrichtung sowie einen Impulszähler (5) aufweist, welcher sowohl mit der Fadenumlauf-Überwachungsvorrichtung (50) als auch der Vorrichtung (23) zur Feststellung der Fadenumlaufrichtung in steuermässiger Verbindung steht und welcher in Abhängigkeit von einem Wechsel der Fadenumlaufrichtung von Vor- und Rückwärtszählen oder umgekehrt umschaltbar ist.

2. Vorrichtung nach Anspruch 1, dadurch gekennzeichnet, dass die Fadenumlauf-Überwachungsvorrichtung (50) dem Fadenrückhalteelement (14) zugeordnet ist, das im gleichen Drehsinn wie die Speicherwalze (10) derart antreibbar ist, dass seine Geschwindigkeit durch die von dem von der Speicherwalze (10) ablaufenden Faden (31) ausgeübte Zugkraft begrenzt wird.

3. Vorrichtung nach Anspruch 1 oder 2, dadurch gekennzeichnet, dass der Impulszähler (5) steuermässig mit dem Antrieb der Abzugsvorrichtung in Verbindung steht.

4. Vorrichtung nach Anspruch 3, dadurch gekennzeichnet, dass die Abzugsvorrichtung durch eine in Fadenlaufrichtung nach der Speicherwalze (10) angeordnete Spulvorrichtung (6) gebildet wird.

5. Vorrichtung nach Anspruch 1, dadurch gekennzeichnet, dass die Vorrichtung zur Feststellung der Fadenumlaufrichtung durch eine zwischen der Speicherwalze (10) und einer Spulvorrichtung (6) angeordnete Fadenverbindungsvorrichtung (23) ersetzt ist, welche den Impulszähler (5) bei Beginn ihrer Arbeit auf Vorwärtszählen und bei Beenden ihrer Arbeit auf Rückwärtszählen stellt.

6. Vorrichtung nach Anspruch 5, dadurch gekennzeichnet, dass die Fadenverbindungsvorrichtung (23) mit dem Antrieb der Spulvorrichtung (6) steuermässig in Verbindung steht.

7. Vorrichtung nach Anspruch 4, dadurch gekennzeichnet, dass der Impulszähler (5) steuermässig mit einer Steuervorrichtung (51) zur Steuerung der Geschwindigkeit der Spulvorrichtung (6) in Abhängigkeit von der auf der Speicherwalze (10) befindlichen Fadenlänge in Verbindung steht.

8. Vorrichtung nach Anspruch 1, dadurch gekennzeichnet, dass der Impulszähler (5) mit einer Stillsetzvorrichtung für den Fadenspeicher (1) oder eine diesem zugeordnete Vorrichtung in Verbindung steht.

## Revendications

1. Accumulateur (1) de fil équipé d'un cylindre de stockage (10) pouvant être entraîné, ainsi que d'un dispositif pour mesurer la longueur emmagasinée du fil qui peut être délivré tangentiellement au cylindre de stockage (10) et peut en être dévidé à l'aide d'un dispositif d'appel, à l'encontre de l'action d'un élément de retenue (14), en traversant un guide-fil (4) situé dans le prolongement de l'axe (122) dudit cylindre, caractérisé par le fait que le dispositif pour mesurer la longueur de fil emmagasinée se compose d'un mécanisme (50) de surveillance de la circulation du fil, d'un dispositif (23) pour constater la direction de la circulation de ce fil, ainsi que d'un compteur d'impulsions (5) qui est en liaison de commande aussi bien evec ledit mécanisme (50) de surveillance de la circulation du fil qu'avec ledit dispositif (23) pour constater la direction de la circulation de ce fil, et qui peut être commuté d'un comptage vers l'avant à un comptage à rebours, ou inversement, en fonction d'une variation intervenant dans la direction de circulation du fil.

2. Dispositif selon la revendication 1, caractérisé par le fait que le mécanisme (50) de surveillance de la circulation du fil est associé à l'élément (14) de retenue du fil, qui peut être mené dans le même sens de rotation que le cylindre de stockage (10), de telle façon que sa vitesse soit limitée par la force de traction exercée par le fil (31) dévidé dudit cylindre de stockage (10).

3. Dispositif selon la revendication 1 ou 2, caractérisé par le fait que le compteur d'impulsions (5) est en liaison de commande avec le mécanisme d'entraînement du dispositif d'appel.

4. Dispositif selon la revendication 3, caractérisé par le fait que dispositif de bobinage (6) situé après le cylindre de stockage (10) dans la direction de mouvement du fil.

5. Dispositif selon la revendication 1, caractérisé par le fait que le dispositif pour constater la direction de la circulation du fil est remplacé par un dispositif (23) de liaison du fil, qui est intercalé entre le cylindre de stockage (10) et un dispositif de bobinage (6) et qui, au début de son intervention, enclenche le compteur d'impulsions (5) en mode comptage normal, et en mode comptage à rebours, à l'achèvement de son intervention.

6. Dispositif selon la revendication 5, caractérisé par le fait que le dispositif (23) de liaison du fil est en coopération de commande avec le mécanisme d'entraînement du dispositif de bobinage (6).

7. Dispositif selon la revendication 4, caractérisé par le fait que le compteur d'impulsions (5) est en liaison de commande avec un dispositif de commande (51), destiné à commander la vitesse du dispositif de bobinage (6) en fonction de la longueur de fil qui se trouve sur le cylindre de stockage (10).

8. Dispositif selon la revendication 1, caractérisé par le fait que le compteur d'impulsions (5) est ein liaison avec un dispositif pour mettre à l'arrêt l'accumulateur (1) de fil, ou un dispositif associé à ce dernier.

**Claims**

1. A thread store (1) with a drivable storage roll (10) and with a device for measuring the stored length of thread which can be fed tangentially to the storage roll (10) and can be withdrawn from it against the action of a retaining element (14) through a thread guide (4) arranged in prolongation of its axis (122) by means of a take-off device, characterized in that the device for measuring the stored length of thread comprises a thread rotation monitoring device (50), a device (23) for determining the direction of rotation of the thread as well as a pulse counter (5) which is connected in terms of control with the thread rotation monitoring device (50) as well as with the device (23) for determining the direction of rotation of the thread and which can be switched from forwards to backwards counting or vice versa as a function of a change in the direction of the thread.

2. A device according to claim 1, characterized in that the thread rotation monitoring device (50) is associated to the thread retaining element (14) which can be driven in the same rotational sense as the storage roll (10) in such a way that its speed is limited by the traction of the thread (31) running form the storage roll (10).

3. A device according to claim 1 or 2, characterized in that the pulse counter (5) is connected in terms of control to the driving mechanism of the take-off device.

4. A device according to claim 3, characterized in that the take-off device is formed by a winding device (6) arranged downstream of the storage roll (10) in the direction of thread travel.

5. A device according to claim 1, characterized in that the device to determine the direction of rotation of the thread is substituted by a thread connecting device (23) arranged between the storage roll (10) and a winding device (6), the thread connecting device switching the pulse counter (5) to forwardcounting at the beginning of its working and to backwards counting at the end of its working.

6. A device according to claim 5, characterized in that the thread connecting device (23) is connected in terms of control with a driving mechanism of the winding device (6).

7. A device according to claim 4, characterized in that the pulse counter (5) is connected in terms of control to the control device (51) for controlling the speed of the winding device (6) as a function of the thread length located on the storage roll (10).

8. A device according to claim 1, characterized in that the pulse counter (5) is connected to a stopping device for the thread store (1) or a device associated herewith.